(19) **Europäisches Patentamt / European Patent Office / Office européen des brevets**

(11) **EP 2 050 176 B1**

(12) **EUROPEAN PATENT SPECIFICATION**

(45) Date of publication and mention of the grant of the patent:
**15.06.2011 Bulletin 2011/24**

(21) Application number: **07787793.4**

(22) Date of filing: **23.07.2007**

(51) Int Cl.:
*H02J 3/00* $^{(2006.01)}$    *H02H 6/00* $^{(2006.01)}$

(86) International application number:
**PCT/EP2007/057548**

(87) International publication number:
**WO 2008/017581 (14.02.2008 Gazette 2008/07)**

(54) **PARAMETER ESTIMATION FOR A THERMAL MODEL OF A POWER LINE**

PARAMETERSCHÄTZUNG FÜR EIN THERMISCHES MODELL EINER NETZLEITUNG

ESTIMATION DE PARAMETRES POUR UN MODELE THERMIQUE D'UNE LIGNE D'ENERGIE ELECTRIQUE

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **11.08.2006 EP 06405340**

(43) Date of publication of application:
**22.04.2009 Bulletin 2009/17**

(73) Proprietor: **ABB RESEARCH LTD.**
**8050 Zürich (CH)**

(72) Inventors:
• **ZIMA, Marek**
**CH-8006 Zürich (CH)**

• **KORBA, Petr**
**CH-5300 Turgi (CH)**
• **LEIRBUKT, Albert**
**N-0461 Oslo (NO)**
• **LARSSON, Mats**
**CH-5405 Baden-Dätwil (CH)**

(74) Representative: **ABB Patent Attorneys**
**C/o ABB Schweiz AG**
**Intellectual Property (CH-LC/IP)**
**Brown Boveri Strasse 6**
**5400 Baden (CH)**

(56) References cited:
**EP-A- 1 489 714      EP-A1- 1 324 454**
**WO-A-2006/068615    JP-A- 9 200 949**

**Description**

FIELD OF THE INVENTION

The invention relates to the operation of electric power transmission lines. It departs from a method of estimating model parameters of a thermal model of a power line as described in the preamble of claim 1.

BACKGROUND OF THE INVENTION

As a consequence of the electric utility industry deregulation and liberalization of electricity markets, the amount of electric power exchanged between remote regions and trading activities between different countries are steadily increasing. In addition, due to the emerging need to optimize assets, substantially increased amounts of power are transmitted through the existing networks, occasionally causing congestion, transmission bottlenecks and/or oscillations of parts of the power transmission systems. In particular, thermal constraints impose limitations on power flow in critical power flow paths or power transmission corridors interconnecting distinct areas. The main reasons for these thermal constraints are an annealing of and/or a permanent damage to the conductors caused by severe overloads as well as an increase in conductor length with the temperature of the power line conductor. The latter may lead to unsatisfactory ground clearance due to line sag and possible flash-over to nearby trees or other line conductors, with subsequent trip by the protection system as a result.

Accordingly, a number of symptoms or effects relate to an elevated line temperature and therefore do influence on the maximum allowable temperature of a specific electric power transmission line. Among the former are a degradation of mechanical properties of the conductors and connectors (loss of mechanical strength and integrity as well as accelerated component aging), an increase in conductor sag, an increase in resistive losses, and a potential damage to devices or equipment attached to the conductors (e.g. for power line communication).

Both the maximum allowable conductor temperature and the worst-case weather conditions used in calculating line ratings are selected by the individual network owners or independent Transmission System Operators (TSO). The operational temperature for a specific overhead power lines generally varies between 50 and 100°C.

Since the line temperature is not measurable in a straight forward way, an alternative limit in terms of maximum allowable *power transfer* or maximum allowable *current* is sometimes derived based on worst-case scenario assumptions. This limit is usually referred to as the "ampacity" of the line. The additional assumptions that need to be made are subjective, and/or the resulting thermal limits in terms of power transfer or current are made on a somewhat ad-hoc basis. Also, since they are based on a worst-case scenario, they are most often also unnecessarily conservative. Consequentially, direct monitoring of the thermal limits in terms of temperature instead of power transfer or current is preferable, necessitating an on-line measurement of the line temperature in order to evaluate, during operation, whether a line is loaded close to its operational temperature limit or not.

A number of techniques have been proposed and several products are available to measure or infer the temperature of power line conductors during operation. These comprise the use of infrared cameras, mechanical tension measurements, direct sag measurements, predictive meteorological methods, or the use of phasor measurement data.

Infrared cameras may be used to take a digital picture of a power line, the colour information of which is subsequently analyzed in a signal processing step in order to derive the temperature of the conductors. This technique can perform monitoring of the temperature of particular hotspots that are known a-priori.

Mechanical tension measurements between the tower and the isolator in combination with solar radiation and ambient temperature measurements are based on the fact that the tension of the line conductor is approximately inversely proportional to its length. From the relationship between tension and length of the conductor, the line sag of a single span and the conductor temperature can be inferred. Likewise, line sag monitors directly measure the line sag of a single span through for example GPS (global positioning system) or laser measurement techniques.

Predictive meteorological methods and products based on the IEEE 738-1993 "Standard for Calculating the Current-Temperature of Bare Overhead Conductors" have been proposed to model the dependency between the line ampacity and various operational and ambient properties. These methods involve a number of meteorological measurements such as air temperature, wind speed, angle between wind and conductor and the elevation above sea level. The IEEE 738-1993 standard then specifies a computational procedure that can be used to estimate a steady-state conductor temperature from the meteorological measurements alone, i.e. without reverting to an independent measurement of the line temperature. The standard is based on a purely static model which does not account for the time-dependent behaviour of the line temperature and which is difficult to tune since many input parameter data has to be assumed and detailed meteorological data is required.

Finally, the patent application EP 1324454 describes a way of determining an actual average conductor temperature, via a calculated series resistance, from on-line phasor measurements. The average line temperature is largely independent of assumptions regarding any line parameters, such as the inductance, reactance or susceptance of the power line conductor. The method comprises the steps of determining time-stamped current phasor information and voltage phasor information for a first end and a second end of the line, computing an ohmic resistance of the line from the phasor information, and computing an average line temperature from the ohmic resistance.

A state or condition of an electric power system at one specific point in time can be obtained from a plurality of synchronized phasor measurements or snapshots collected across the electric power system or power transmission network. Phasors are time-stamped, complex values such as amplitude and phase, of local electric quantities such as currents, voltages and load flows, and can be provided by means of Phasor Measurement Units (PMU). These units involve a very accurate global time reference, obtained e.g. by using the Global Positioning Satellite (GPS) system or any other comparable means, and allowing synchronization of the time-stamped values from different locations. The phasors are sampled at a rate of 20 to 60 Hz with a temporal resolution of less than 1 millisecond, and thus can provide a rather dynamic view on transient states that goes beyond the rather static view as provided by scalar values such as RMS values of voltages or currents and relied upon by SCADA/EMS systems.

Accordingly, parameters of an electric power network may be estimated by repeatedly measuring, at a plurality of network locations, synchronized values of electrical network variables; and identifying there from, during network operation, currently valid parameters of a mathematical model of the power network. In particular and by way of example, the Patent Application EP-A 1 489 714 discloses an adaptive detection of electromechanical oscillations in electric power systems based on a linear time-varying model. A system quantity or signal such as e.g. the amplitude or angle of the voltage or current at a selected node of the network is sampled, and the parameters of the linear model representing the behaviour of the power system are estimated by means of Kalman filtering techniques. This process is carried out in a recursive manner, i.e. every time a new value of the system quantity is measured the parameters of the model are updated. Finally, from the estimated parameters of the model, the parameters of the oscillatory modes, such as frequency and damping are deduced and presented to an operator. This adaptive identification process enables a real-time analysis of the present state of the power system.

DESCRIPTION OF THE INVENTION

It is therefore an objective of the invention to enable, at any time during operation, a reliable forecast of a power line conductor temperature. This objective is achieved by a method of estimating model parameters of a thermal model of a power line as well as a use of the thermal model according to the claims 1 and 7, respectively. Further preferred embodiments are evident from the dependent patent claims.

According to the invention, a relationship between a temperature of the power line or power transmission conductor, an electrical quantity of the power line such as a current or power flow through the power line, as well as meteorological quantities or ambient condition of the power line such as wind speed, wind direction, humidity, solar radiation and ambient temperature, is established in the form of a thermal model of the power line and repeatedly calculated or updated during operation of the power line. To this end, values of the aforementioned quantities or variables are continuously or periodically measured or sampled, and the collected values of the quantities are evaluated in order to update or tune model parameters of the thermal model. Including the temperature of the power line as a variable of the thermal model allows using, without diminishing its validity, a simple model or even a black box model with a limited number of model parameters. The latter may be updated without excessive computational efforts as frequency as desired, which ultimately increases the reliability, at any time during operation, of a forthcoming line temperature prediction.

In a preferred embodiment of the invention, an average temperature representative of the entire line is determined via two Phasor Measurement Units (PMU) providing synchronized phasor values from two ends of the power line. An ohmic resistance of the power line is computed from the phasor values, from which in turn the average line temperature can be derived. As the PMUs are primarily provided for other purposes, e.g. for determining electrical quantities, such a double use avoids the need for any dedicated line temperature sensing device. In addition, as the PMUs are generally mounted indoors in a protected environment, they are less exposed to environmental stress than any other line temperature sensing device.

On the other hand, it is advantageous to calibrate the conversion from the resistance to the temperature of the power line by means of such a dedicated line temperature sensor. As the latter is only temporarily needed for the specific purpose of calibration, it may be expensive or otherwise cumbersome without impairing the subsequent operation of the power line.

In a preferred variant, the meteorological data is obtained by subscription and import from an external source such as a meteorological institute which is distinct from the Transmission System Operator (TSO). Relying on the data from a specialist avoids the need for dedicated measurement units located on or close to the line conductor and operated by the TSO. Due to the relatively slow change in ambient conditions and their small geographical gradients, any potential temporal or geographical offset between the meteorological data and electrical data is of a lesser concern and can be ignored.

In an advantageous variant, an adaptive method or algorithm are based on a recursive calculation of the model parameters for each time-step, based on new values of the measured quantities and the old values of the model parameters. As opposed to the collection of data over a time window and then performing the parameter identification at once, any change in the power system can thus be detected much faster. Preferably, in this context, the thermal model is a linear autoregressive model of finite order, and an adaptive Kalman Filter is used to estimate its model parameters.

The thermal model may be a nonlinear parametric model based on a heat balance equation. Such a physically inspired model offers higher confidence when used for simulation, prediction or extrapolation and is thus preferable to e.g. a linear parametric model with no physical meaning, such as an Auto-Regressive Moving Average model (A-R-MA). The ARMA model on the other hand has the advantage that, except for the model order, no a-priori assumptions on model structure and parameters have to be made.

In a further aspect of the invention, the thermal model is used to calculate a power line temperature given actual or forecasted values of electrical and meteorological quantities as e.g. provided by load predictions or weather forecasts. By comparing this predicted temperature with a temperature limit for the power line, a maximum amount of current or electrical power flow that can be transported on the line without violating the line temperature or sag limits may be derived, preferably by means of a simulation or inversion of the thermal model. Determination of a maximum flow that will result in a certain conductor temperature is particularly useful in order to determine the actual power flow limits to be used in a balance market clearing process. Since these limits are less conservative than a-priori known limits, less expensive balance power can be scheduled resulting in an economical gain for the TSO.

The present invention also relates to a computer program product including computer program code means for controlling one or more processors of a model parameter estimator, a line temperature predictor or a Power Flow Control device connected to the power line, and in particular to a computer program product including a computer readable medium containing therein the computer program code means.

BRIEF DESCRIPTION OF THE DRAWINGS

The subject matter of the invention will be explained in more detail in the following text with reference to preferred exemplary embodiments which are illustrated in the attached drawings, of which:

Fig. 1 schematically shows a power line with a number of measurement devices,
Fig.2 depicts a process of model parameter estimation, and
Fig.3 depicts measured values of a number of quantities recorded for a period of 6h.

The reference symbols used in the drawings, and their meanings, are listed in summary form in the list of reference symbols. In principle, identical parts are provided with the same reference symbols in the figures.

DETAILED DESCRIPTION OF PREFERRED EMBODIMENTS

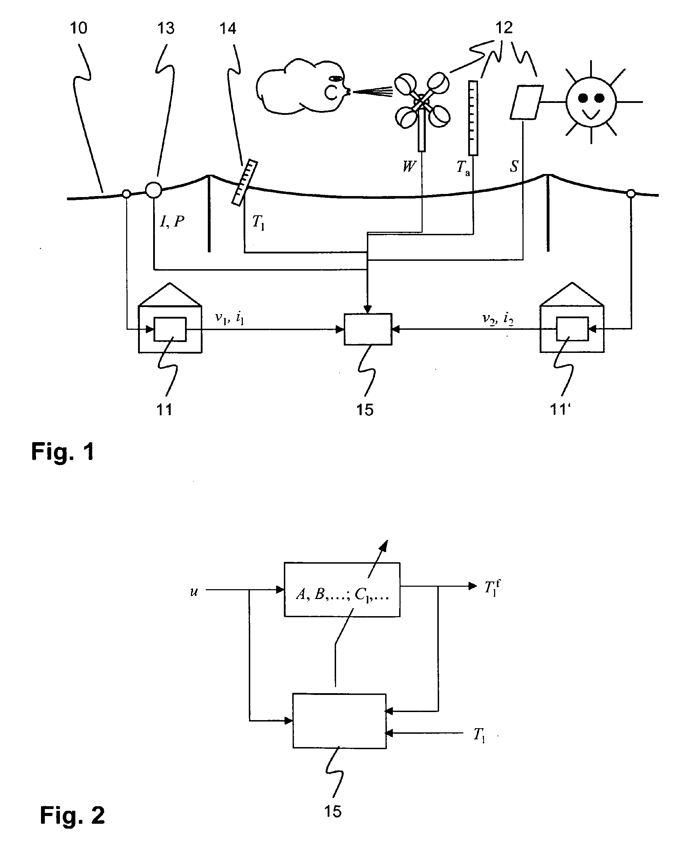

Fig.1 shows a power line 10 that is part of a power system (not shown) comprising a plurality of power generating means and power consumers interconnected by a transmission network. At two ends of the power line, two synchronized Phasor Measurement Units (PMU) 11, 11' are provided and preferably mounted in respective substation control buildings. Sensing devices for measuring meteorological quantities at one or more locations in the vicinity of the power line 10 are collectively referred to as weather station 12. Means 13 for measuring electrical quantities of the power line are depicted schematically, some of their components such as instrument transformers or process busses may also be used by the PMUs. An independent line temperature measurement device 14 is likewise shown. The weather station 12, the means 13 and the device 14 collect and provide a number of equidistantly sampled measurements of ambient conditions (wind speed $W$, wind direction, solar radiation $S$, ambient temperature $T_a$, humidity), electrical quantities (line current $I$, power flow $P$) and line temperature ($T_l$) to a processor 15 of a model parameter estimator, a line temperature predictor or a Power Flow Control device.

Fig.2 depicts an exemplary process of model parameter estimation according to the invention. The measured values of the meteorological and electrical quantities, collectively denoted as input variables u, are fed to the processor 15 for estimating or tuning, based on parameter identification or fitting techniques such as Kalman filters, Maximum Likelihood or Least-Squares, values of model parameters $A, B,....; C_1,....$ of a thermal model of the power line. Based on the momentary values of the electrical and meteorological quantities as well as of the model parameters, a line temperature prediction $T_1^f$ is produced as an output variable, and any difference between the latter and a corresponding independent measurement of the line temperature $T_1$, is fed back for further evaluation.

The thermal model can be a standard linear black box model in transfer function or state-space form. For dealing with several input variables u the discrete-time state-space form:

$$x(kT + T) = Ax(kT) + Bu(kT) + Ke(kT) \qquad (a)$$

$$y(kT) = Cx(kT) + Du(kT) + e(kT) \qquad (b)$$

$$x(0) = x0 \qquad (c)$$

is the most convenient one. Here, x denotes the dynamic state of the model, u the driving input variables, y the output of the system that model should reproduce and e Gaussian white nose, whereas A, B,... are model parameters. Linear models are attractive because of the simple parameter estimation techniques that are available and because of the fact that virtually no a-priori knowledge needs to be given, except for which measurements to use. On the other hand, such linear models can only be used to predict the line behaviour with rather small variations in the input variables, since non-linear contributions between the conductor temperature and the measured quantities could be quite substantial when the variations in the conductor temperature and/or measurement quantities are large.

Accordingly, a linear model is suitable for short-term predictions on the order of minutes. Particularly a.prediction interval of some 5-30 minutes can be used to compute dynamic ratings of power lines based on a 5-30 minute forecast and based on the identified dependencies between the conductor temperature and the electrical and meteorological measurements. This rating can be most beneficially used in the market clearing for the balance market which usually takes place on a similar time scale.

Alternatively, a physically inspired thermal model based on a heat-balance equation has the advantage that model parameters which are known with enough certainty can be fixed a-priori, and that such a thermal model could be valid also with quite large variations in the operating points. However, such a model would be non-linear and require more complicated parameter estimation techniques than the linear black box models. The extended Kalman filter has been shown to perform well in the estimation of parameters in non-linear models, although also other options are available. A typical heat balance equation has the form

$$C_l \frac{dT_l^i}{dt} = q_{in}(I_i^i, T_a^i, Solar^i, ...) - q_{out}(T_a^i, Wind^i, ...) \,,$$

where $C_1$ is a model parameter reflecting a characteristic thermal time or thermal capacity of the line, and where $q_{in}$ represents the incoming heat flow to the conductor with main contributions from the sun's radiation and the heat produced by resistive losses in the conductor, and where $q_{out}$ is the total heat loss of the conductor. The heat loss depends on many factors, for example the radiation and conduction to the surrounding air which in turn depends on factors like the wind speed and direction and the air humidity. The two heat transfer terms obviously involve a number of further model parameters.

For prediction in the longer term it is desirable to use a higher model order and long data sets so that the daily and even weekly or monthly variations can be modelled. Predictions based on such models could be used for example in the computation dynamic ratings of lines in the day ahead market, which typically are executed 24 hours ahead with update intervals of one hour.

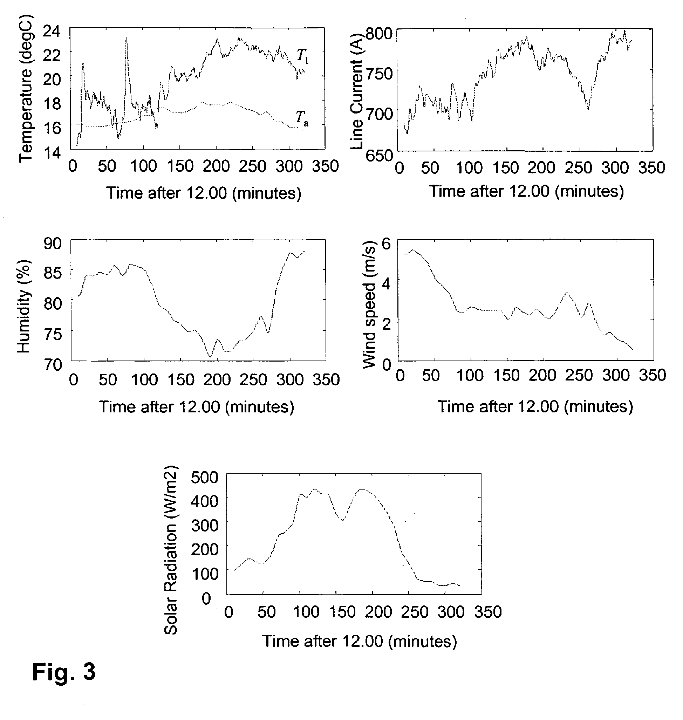

Fig.3 shows some measurement data from a field test, in which the weather and electrical phasor measurements were recorded during an observation window of six hours following the connection of a 380 kV transmission line at midday. The measured quantities are (top left plot) the conductor temperature $T_l$ (continuous line) and the ambient temperature $T_a$ (dashed line), the line current (top right plot) the humidity (middle left plot), the wind speed (middle right plot) and the solar radiation (bottom plot) at a specific location along the line. The recorded measurement samples were evaluated for the identification of the parameters A, B,... of a first order discrete time state-space model as indicated above, with the aim of accurately reproducing the line temperature. On the basis of the identified model parameters, the effect of a 100 A increase in line current and of a one degree change in ambient temperature have been simulated, yielding an increase in the line temperature of about 2.5°C and 1°C respectively.

The phasor data $v_1$, $i_1$; $v_2$, $i_2$ is collected from phasor measurement units that are distributed over a large geographical area, i.e. over tens to hundreds of kilometres. Since the phasor data from these disparate sources are analysed in conjunction, they must refer to a common phase reference. Therefore, the different phasor measurement units must have local clocks that are synchronised with each other to within a given precision. Such a synchronisation of the phasor measurement units is preferably achieved with a known time distribution system, for example the global positioning (GPS) system. In a typical implementation, the phasor data is determined at least every 200 or every 100 or preferably every 20 milliseconds, with a temporal resolution of preferably less than 1 millisecond. In a preferred embodiment of the invention, the temporal resolution is less than 10 microseconds, which corresponds to a phase error of 0.2 degrees. Each measurement is associated with a time stamp derived from the synchronised local clock. The phasor data therefore comprises time stamp data.

According to a preferred variant of the invention, the temperature of the line is determined in the following way: The electric line parameters, or at least the ohmic resistance $R_1$ of the line, i.e. the real part $R_1$ of the line impedance $Z=R_1+jX_1$ are determined from measured or computed phasor information representing some or all of the voltage and current phasors at the two ends of line.

In a first variant, it is assumed that the shunt capacitance $jX_c$ remains essentially constant during power line operation and is known from other measurements, design parameters or calculations. Then it is necessary to determine only the two voltage phasors $v_1$ and $v_2$ at either end of the line and one of the current phasors $i_1$ or $i_2$. Let $i_1$ be measured. Then the impedance Z is

$$Z = \frac{v_1 - v_2}{i_1 - v_1 \cdot jX_C}.$$

In a second variant, no assumption on shunt impedances is made, and the two voltage phasors $v_1$ and $v_2$ and the two current phasors $i_1$ or $i_2$ are measured or determined from measurements. Determining the actual electrical line parameters $R_1$, $X_1$, Xc from these measurements is common knowledge. Since resulting equations for the electrical line parameters are non-linear, numerical methods such as Newton-Raphson approximation are used for determining actual parameter values. The resulting line parameters are actual values in that they are determined online and represent the actual state of the power line.

The average line temperature $T_1$ is computed from the ohmic resistance $R_1$ by modelling a relationship between temperature and resistance as linear, i.e.

$$R_l = R_0(1 + \alpha_0(T_l - T_0)),$$

where $R_0$ is a known material property specified by the power line conductor manufacturer, i.e. a reference resistance dependent on the construction of the line, and where $\alpha_0$ is a material constant for the line cable. The linear relationship is typical for common conductor materials such as copper or aluminium. As an example, the parameter values are such that for a line temperature change of $\Delta T = 30°C$ the resistance changes by about $\Delta R_1 = 12\%$. The equation for the chosen relationship is solved for $T_1$, which gives the desired average line temperature.

LIST OF DESIGNATIONS

| | |
|---|---|
| 10 | power line |
| 11, 11' | Phasor Measurement Units |
| 12 | weather station |
| 13 | electrical quantity measurement means |
| 14 | line temperature measurement device |
| 15 | processor |

Claims

1. A method of estimating model parameters ($A, B,...; C_1,...$) of a thermal model of a power line (10), comprising

- measuring values of an electrical quantity ($I$, $P$) of the power line and of meteorological quantities ($T_a$, $S$, $W$) representing ambient conditions of the power line, and
- calculating values of the model parameters from said measured values,

**characterized in that** the method comprises

- measuring, repeatedly during operation of the power line, momentary values ($I^i$, $T_a^i$, $S^i$, $W^i$) of the electrical and meteorological quantities,
- measuring concurrently a momentary value ($T_1^i$) of a temperature ($T_1$) of the power line, and
- calculating, repeatedly during operation of the power line, the values ($A^i$, $B^i$;...; $C_1^i$,...) of the model parameters from said measured values.

2. The method according to claim 1, **characterized in that** measuring a momentary value ($T_1^i$) of the temperature of the power line comprises

- measuring, by means of two Phasor Measurement Units (11, 11'), synchronized phasor data ($v_1^i$, $i_1^i$; $v_2^i$, $i_2^i$) at two ends of the power line,
- computing a value ($R_1^i$) of an electrical resistance ($R_1$) of the power line from the phasor data, and
- computing, from the value ($R_1^i$) of the electrical resistance of the power line, an average line temperature as the momentary value ($T_1^i$) of the temperature of the power line.

3. The method according to claim 2, **characterized in that** computing the average line temperature involves an analytical expression with parameters ($R_0$, $\alpha_0$) suitably calibrated by means of an independent line temperature measuring device (14).

4. The method according to claim 1, **characterized in that** measuring momentary values ($T_a^i$, $S^i$, $W^i$) of the meteorological quantities involves measuring the values by a provider of meteorological data other than an operator of the power line.

5. The method according to claim 1 or 2, **characterized in that** it comprises

- generating a series of measured values ($T_1^1$, $T_1^2$,...; $u^1$, $u^2$,...) of the temperature of the power line and the electrical and meteorological quantities, and
- adaptively calculating updated values ($A^k$, $B^k$;...; $C_1^k$,...) of said model parameters every time a new value ($T_1^k$, $u^k$) of the temperature of the power line or the electrical and meteorological quantities is measured.

6. The method according to claim 1, **characterized in that** the thermal model is a nonlinear parametric model based on a heat balance equation.

7. A use of a thermal model with momentary model parameter values ($A^i$, $B^i$;...; $C_1^i$,...) estimated according to one of claims 1 to 6, for predicting a value ($T_1^f$) of the line temperature of the power line, comprising

- providing forecasted values ($u^f$) of the electrical and meteorological quantities,
- calculating a power line temperature forecast ($T_1^f$) based on the momentary model parameters and the forecasted values of the electrical and meteorological quantities.

8. The use according to claim 7, **characterized in that** it comprises

- comparing the power line temperature forecast ($T_1^f$) with a power line temperature limit, and
- calculating a maximum allowable value of the electrical quantity ($I$, $P$) there from.

9. The use according to claim 8, **characterized in that** it comprises

- using a linear thermal model for the power line, and
- providing the maximum allowable value of the electrical quantity ($I$, $P$) to a balance market clearing process.

**Patentansprüche**

1. Verfahren zum Schätzen von Modellparametern ($A, B, ...; C_1,...$) eines thermischen Modells einer Stromleitung (10), mit den folgenden Schritten:

   - Messen von Werten einer elektrischen Größe ($I, P$) der Stromleitung und von meteorologischen Größen ($T_a$, $S, W$), die Umgebungsbedingungen der Stromleitung repräsentieren, und
   - Berechnen von Werten der Modellparameter aus den gemessenen Werten,

   **dadurch gekennzeichnet, dass** das Verfahren die folgenden Schritte umfasst:

   - wiederholtes Messen von Momentanwerten ($I^i, T_a^i, S^i, W^i$) der elektrischen und meteorologischen Größen während des Betriebs der Stromleitung,
   - gleichzeitiges Messen eines Momentanwerts ($T_1^i$) einer Temperatur ($T_1$) der Stromleitung und
   - wiederholtes Berechnen der Werte ($A^i, B^i; ...; C^i;...$) der Modellparameter aus den gemessenen Werten während des Betriebs der Stromleitung.

2. Verfahren nach Anspruch 1, **dadurch gekennzeichnet, dass** das Messen eines Momentanwerts ($T_1^i$) der Temperatur der Stromleitung die folgenden Schritte umfasst:

   - Messen von synchronisierten Zeigerdaten ($v_1^i$, $i_1^i$, $v_2^i$, $i_2^i$) an zwei Enden der Stromleitung mittels zweier Zeigermesseinheiten (11, 11'),
   - Berechnen eines Werts ($R_1^i$) eines elektrischen Widerstands ($R_1$) der Stromleitung aus den Zeigerdaten und
   - Berechnen einer mittleren Leitungstemperatur aus dem Wert ($R_1^i$) des elektrischen Widerstands der Stromleitung als den Momentanwert ($T_1^i$) der Temperatur der Stromleitung.

3. Verfahren nach Anspruch 2, **dadurch gekennzeichnet, dass** bei der Berechnung der mittleren Leitungstemperatur ein analytischer Ausdruck mit Parametern ($R_0, \alpha_0$) beteiligt ist, die mittels einer unabhängigen Leitungstemperatur-Messeinrichtung (14) kalibriert werden.

4. Verfahren nach Anspruch 1, **dadurch gekennzeichnet, dass** das Messen von Momentanwerten ($T_a^i, S^i, W^i$) der meteorologischen Größen das Messen der Werte durch einen Anbieter von meteorologischen Daten umfasst, der von einem Betreiber der Stromleitung verschieden ist.

5. Verfahren nach Anspruch 1 oder 2, **dadurch gekennzeichnet, dass** es die folgenden Schritte umfasst:

   - Erzeugen einer Reihe von gemessenen Werten ($T_1^1, T_1^2, ...; u^1, u^2, ...$) der Temperatur der Stromleitung und der elektrischen und meteorologischen Größen und
   - adaptives Berechnen von aktualisierten Werten ($A^k, B^k,...; C_1^k,...$) der Modellparameter jedes Mal, wenn ein neuer Wert ($T_1^k, u^k$) der Temperatur der Stromleitung oder der elektrischen und meteorologischen Größen gemessen wird.

6. Verfahren nach Anspruch 1, **dadurch gekennzeichnet, dass** das thermische Modell ein nichtlineares parametrisches Modell auf der Basis einer Wärmegleichgewichtsgleichung ist.

7. Verwendung eines thermischen Modells mit momentanen Modellparameterwerten ($A^i, B^i;...; C_1^i,...$), die gemäß einem der Ansprüche 1 bis 6 geschätzt werden, zur Vorhersage eines Werts ($T_1^f$) der Leitungstemperatur der Stromleitung, mit den folgenden Schritten:

   - Bereitstellen von vorhergesagten Werten ($u^f$) der elektrischen und meteorologischen Größen,
   - Berechnen einer Stromleitungs-Temperaturvorhersage ($T_1^f$) auf der Basis der momentanen Modellparameter und der vorhergesagten Werte der elektrischen und meteorologischen Größen.

8. Verwendung nach Anspruch 7, **dadurch gekennzeichnet, dass** sie die folgenden Schritte umfasst:

   - Vergleichen der Stromleitungs-Temperaturvorhersage ($T_1^f$) mit einer Stromleitungs-Temperaturgrenze und
   - Berechnen eines maximal zulässigen Werts der elektrischen Größe ($I, P$) daraus.

9. Verwendung nach Anspruch 8, **dadurch gekennzeichnet, dass** sie die folgenden Schritte umfasst:

   - Verwenden eines linearen thermischen Modells für die Stromleitung und
   - Bereitstellen des maximal zulässigen Werts der elektrischen Größe (*I*, *P*) für einen Gleichgewichts-Markt-Clearing-Prozess.


**Revendications**

1. Procédé d'estimation de paramètres de modèle (*A*, *B*, ..., $C_1$,...) d'un modèle thermique d'une ligne électrique (10), consistant à :

   - mesurer des valeurs d'une grandeur électrique (*I*, *P*) de la ligne électrique et de grandeurs météorologiques *($T_a$, S, W)* représentant des conditions ambiantes de la ligne électrique, et
   - calculer des valeurs des paramètres du modèle à partir desdites valeurs mesurées,

   **caractérisé en ce que** le procédé consiste à :

   - mesurer de façon répétée pendant le fonctionnement de la ligne électrique des valeurs instantanées ($I^i$, $\mathbf{T}_a^i$, $S^i$, $W^i$) des grandeurs électriques et météorologiques,
   - mesurer simultanément une valeur instantanée ($\mathbf{T}_1^i$) d'une température ($T_1$) de la ligne électrique, et

   - calculer de façon répétée pendant le fonctionnement de la ligne électrique les valeurs ($A^i$, $B^i$, ...; $\mathrm{C}_1^i$, ...) des paramètres du modèle à partir desdites valeurs mesurées.

2. Procédé selon la revendication 1, **caractérisé en ce que** la mesure d'une valeur instantanée ( $\mathrm{T}_I^i$ ) de la température de la ligne électrique consiste à :

   - mesurer, au moyen de deux Unités de Mesure de Phaseurs (11, 11'), des données de phaseurs synchronisées ($\mathbf{v_1^i}$, $\mathbf{i_1^i}$, $\mathbf{v_2^i}$, $\mathbf{i_2^i}$) aux deux extrémités de la ligne électrique,
   - calculer une valeur ($\mathbf{R}_1^i$) d'une résistance électrique ($R_1$) de la ligne électrique à partir des données de phaseurs, et
   - calculer, à partir de la valeur ($\mathbf{R}_1^i$) de la résistance électrique de la ligne électrique, une température de ligne moyenne en tant que valeur instantanée ($\mathbf{T}_1^i$) de la température de la ligne électrique.

3. Procédé selon la revendication 2, **caractérisé en ce que** le calcul de la température de ligne moyenne fait intervenir une expression analytique de paramètres ($R_0$, $\alpha_0$) étalonnée de manière appropriée au moyen d'un dispositif de mesure de température de ligne indépendant (14).

4. Procédé selon la revendication 1, **caractérisé en ce que** la mesure de valeurs instantanées ($\mathbf{T_a^i}$, $\mathbf{S^i}$, $\mathbf{W^i}$) des grandeurs météorologiques fait intervenir la mesure des valeurs par un fournisseur de données météorologiques autres qu'un opérateur de la ligne électrique.

5. Procédé selon la revendication 1 ou 2, **caractérisé en ce qu'**il consiste à :

   - générer une série de valeurs mesurées ($\mathbf{T_1^1}$, $\mathbf{T_1^2}$,...; $\mathbf{u^1}$, $\mathbf{u^2}$,...) de la température de la ligne électrique et les grandeurs électriques et météorologiques, et
   - calculer de manière adaptative des valeurs mises à jour ($\mathbf{A^k}$, $\mathbf{B^k}$;...; $\mathbf{C_1^k}$,...) desdits paramètres de modèle chaque fois qu'une nouvelle valeur ($\mathbf{T_1^k}$, $\mathbf{u^k}$) de la température de la ligne électrique ou des grandeurs électriques et météorologiques est mesurée.

6. Procédé selon la revendication 1, **caractérisé en ce que** le modèle thermique est un modèle paramétrique non linéaire basé sur une équation d'équilibre thermique.

7. Utilisation d'un modèle thermique avec des valeurs de paramètres de modèle instantanées ($A^i$, $B^i$, ...; $\mathrm{C}_1^i$, ...) estimées conformément à l'une des revendications 1 à 6, pour prédire une valeur ($\mathrm{T}_1^f$) de la température de ligne de la ligne électrique, consistant à :

- fournir des valeurs prévues (u$^f$) des grandeurs électriques et météorologiques,

- calculer une température de ligne électrique prévue $\left(T_1^f\right)$ sur la base des paramètres de modèle instantanés et des valeurs prévues des grandeurs électriques et météorologiques.

**8.** Utilisation selon la revendication 7, **caractérisée en ce qu'**elle consiste à :

- comparer la température de ligne électrique prévue $\left(T_1^f\right)$ à une limite de température de ligne électrique, et
- calculer une valeur admissible maximale de la grandeur électrique (*I, P*) à partir de celle-ci.

**9.** Utilisation selon la revendication 8, **caractérisée en ce qu'**elle consiste à :

- utiliser un modèle thermique linéaire pour la ligne électrique, et
- fournir la valeur admissible maximale de la grandeur électrique (*I, P*) à un processus de régulation du marché à l'équilibre.

**Fig. 1**

**Fig. 2**

**Fig. 3**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1324454 A
- EP 1489714 A